Europäisches Patentamt

(19) European Patent Office

Office européen des brevets

(11) Publication number: **0 062 373**
**B1**

(12) **EUROPEAN PATENT SPECIFICATION**

(45) Date of publication of patent specification: **10.09.86**

(21) Application number: **82200372.9**

(22) Date of filing: **25.03.82**

(51) Int. Cl.⁴: **C 04 B 26/18**

(54) **Polymer concrete compositions and their use in preparing articles.**

(30) Priority: **03.04.81 US 250979**
**03.04.81 US 250990**

(43) Date of publication of application:
**13.10.82 Bulletin 82/41**

(45) Publication of the grant of the patent:
**10.09.86 Bulletin 86/37**

(84) Designated Contracting States:
**BE DE FR GB IT NL SE**

(56) References cited:
**FR-A-2 116 344**
**US-A-3 377 406**
**US-A-3 407 165**
**US-A-3 420 914**
**US-A-3 830 776**

**CHEMICAL ABSTRACTS, vol. 92, no. 22, June
1980, page 284, no. 184903a, Columbus Ohio
(USA);**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Muszynski, Larry Chester
15115 Plaza Libre
Houston Texas (US)**

(74) Representative: **Aalbers, Onno et al
P.O. Box 302
NL-2501 CH The Hague (NL)**

Courier Press, Leamington Spa, England.

# 0 062 373

**Description**

This invention relates to polymer concrete compositions and their use in preparing articles.

The use of polymeric materials in concrete formulations is well known. One common composite material is called polymer-impregnated concrete (PIC) wherein hardened portland cement concrete is impregnated with a liquid monomeric material which is subsequently polymerized *in situ*. These materials have remarkable durability and resistance against salts and the like which make their use especially attractive for concrete pipe, desalting plants, tunnel support linings and bridge decks. Another system is a polymer-portland cement concrete (PPCC) which is produced by adding a monomeric or polymeric material to a fresh portland cement concrete mixture which is subsequently cured and polymerized after placement. It will be appreciated that both the PIC and PPCC systems are hydraulic systems, i.e., they require the use of water to cure the portland cement. Accordingly, another system has more recently been discovered which is called polymer concrete (PC) which contains little or no cement and no water. The PC is a composite formed by polymerizing a monomeric material with aggregate (gravel, sand, etc.).

The resins most often employed in present PC compositions are the so-called acrylate resins, especially methyl methacrylate. These acrylate resins are relatively inexpensive, however, they suffer a multitude of serious shortcomings. For example, they exhibit high volatility, high toxicity, high flammability, and are explosive. More importantly, they exhibit high shrinkage which severely limits their useful life in some applications.

It has now been found that a number of the serious environmental shortcomings (toxicity, volatility, etc.) can be eliminated by the replacement of the methacrylate resins with polyester or vinyl ester resins in combination with an aggregate composition containing fly ash.

FR—A—2116344 is concerned with polymer concrete compositions containing fly ash, an aggregate having a minimum particle size of less than 0.1 mm and a curable polymer selected from polyurethanes, epoxy resins or unsaturated polyesters. No experimental illustration of the alleged invention has been given; in the working examples the aggregate used together with fly ash has a minimum particle size of 0.2 mm. No attention has been paid to the problem of controlling the curing time, consequently, there is nothing in this disclosure to conclude that the alleged novel polymer concretes would satisfy the needs set by application in practice.

According to the present invention there is provided a polymer concrete composition comprising a curable unsaturated ester resin, and an aggregate comprising fly ash and sand, characterized in that the composition comprises

(1) from 3% to 15% by weight of a composition comprising an unsaturated polyester or vinyl ester resin and a free-radical initiator, said composition having a curing time of at least 1 hour at ambient temperature, said unsaturated polyester resin being selected from resins derived from glycol and iso- or orthophthalic acid, said vinyl ester resin being selected from resins prepared by reacting an ethylenically unsaturated monocarboxylic acid with a glycidylpolyether of a polyhydric phenol having an epoxy equivalency greater than 1.0.

(2) from 85% to 97% by weight of an aggregate composition containing 5% to 50% by weight of fly ash based on the aggregate composition, at least part of the balance being sand.

The vinyl ester resins which are used in compositions of the invention are those prepared by reacting an ethylenically unsaturated monocarboxylic acid with a glycidylpolyether of a polyhydric phenol having an epoxy equivalency greater than 1.0.

For clarity, many of the polyglycidylethers of polyhydric phenols are described in terms of epoxy equivalent values. The meaning of this expression is described in U.S. Patent No. 2,633,458. The polyethers used in the present process are those having an epoxy equivalency greater than 1.0.

Various examples of liquid polyepoxides that may be used in the process of the invention are given in U.S. Patent No. 2,633,458, and other suitable polyepoxides are disclosed in U.S. Patent No. 3,377,406 and U.S. Patent No. 3,420,914.

Preferred glycidyl polyethers are derived from 2,2-bis(4-hydroxyphenyl)propane.

Typically such glycidyl polyethers of 2,2-bis(4-hydroxyphenyl)propane have an average molecular weight between about 300 and 3,000 and an epoxide equivalent weight between about 140 and 2,000.

The ethylenically unsaturated monocarboxylic acid used to esterify the polyepoxide may be aliphatic, cycloaliphatic or aromatic.

Particularly preferred acids to be utilized comprise ethylenically unsaturated acids, such as acrylic acid, methacrylic acid, crotonic acid, alpha-phenylacrylic acid, alpha-cyclohexylacrylic acid, cyanoacrylic acid and methoxyacrylic acid; and partial esters of polycarboxylic acids, and particularly the alkyl, alkenyl, cycloalkyl and cycloalkenyl esters of polycarboxylic acids, such as butyl hydrogen maleate, allyl hydrogen phthalate, allyl hydrogen succinate and allyl hydrogen fumarate.

Monocarboxylic ethylenically unsaturated carboxylic acids such as acrylic or methacrylic acid are particularly preferred.

Processes for the esterification of epoxy resins with ethylenically unsaturated carboxylic acids are described in U.S. Patents Nos. 3,377,406 and 3,420,914. The vinyl ester resins thereby produced will vary from liquids to solid resins, and will generally possess free hydroxy groups, ethylenic groups and epoxide groups.

2

Some or all of any pendant hydroxy groups on the vinyl ester resins may, if desired, be reacted with an acid anhydride, preferably a polycarboxylic acid anhydride such as maleic anhydride.

The unsaturated polyesters are those derived from glycol and isophthalic or orthophthalic acid. The basic technology for the manufacture of such polyesters is well established. Simply, such unsaturated polyesters may be prepared by either the fusion or solvent process. Suitable glycols include ethylene glycol, propylene glycol, neopentyl glycol and the like.

The unsaturated polyester and vinyl ester resins may be mixed with one or more compatible unsaturated monomers. Examples of such monomers include, among others, aromatic compounds such as styrene, alpha-methylstyrene, dichlorostyrene, vinyl naphthalene, and vinyl phenol, unsaturated esters, such as acrylic and methacrylic esters, vinyl acetate, vinyl benzoate, vinyl chloroacetate, vinyl laurate, unsaturated acids, such as acrylic and alpha-alkylacrylic acids, butenoic acid, and allylbenzoic acid, and vinylbenzoic acid, halides, such as vinyl chloride and vinylidene chloride, nitriles, such as acrylonitrile and methacrylonitrile, diolefins, such as butadiene, isoprene and methylpentadiene, esters of polycarboxylic acids, such as diallyl phthalate, divinyl succinate, diallyl maleate, divinyl adipate, and dichloroallyl tetrahydrophthalate, and mixtures thereof.

In general the weight ratio of unsaturated polyester or vinyl ester resin to unsaturated monomer will be in the range 100:0 to 20:80, preferably 95:5 to 30:70 and advantageously 80:20 to 50:50.

Especially preferred unsaturated comonomers are the aromatic unsaturated compounds such as styrene, vinyl toluene and divinyl benzene.

In one preferred embodiment of the invention, the polyester or vinyl ester resin composition contains styrene, the weight ratio of polyester or vinyl ester resin to styrene being in the range 80:20 to 50:50.

The free-radical initiator may conveniently be an organic peroxide or an azo compound. Examples of such free-radical initiators include organic peroxides, such as benzoyl peroxide, tertiary butyl hydroperoxide, ditertiary butyl peroxide, hydrogen peroxide, potassium persulphate, methyl cyclohexyl peroxide, cumene hydroperoxide, acetyl benzoyl peroxide, tetralin hydroperoxide, phenylcyclohexane hydroperoxide, tertiary butylisopropylbenzenehydroperoxide, tertiary butylperacetate, tertiary butylacetate, tertiary butyl perbenzoate, ditertiary amyl perphthalate, ditertiary peradipate, tertiary amyl percarbonate, and mixtures thereof; and azo compounds such as 2,2'-azo-bis-isobutyronitrile, dimethyl 2,2'-azo-bis-isobutyrate, 2,2'-azo-bis(2,4-dimethylvaleronitrile), and 2,2'-azo-bis-isobutylamide. Particularly preferred catalysts include the diaroyl peroxides, tertiary alkyl hydroperoxides, alkyl peresters of percarboxylic acids and particularly those of the above-noted groups which contain no more than 18 carbon atoms per molecule and have a decomposition temperature below 125°C.

The amount of free radical initiator will be a curing amount, conveniently from about 1% to about 15% by weight based on the unsaturated polyester or vinyl ester composition.

Preferably the free-radical initiator is a peroxide, advantageously methyl ethyl ketone peroxide or cumene hydroperoxide.

If desired the unsaturated polyester or vinyl ester resin composition may additionally contain one or more modifiers such as driers (e.g. cobalt naphthenate), plasticizers, stabilizers, extenders, oils, resins, tars, asphalts, pigments, reinforcing agents or thixotropic agents.

Fly ash is derived as a by-product of the firing of coal. It will be appreciated that because of the differences in coal sources, coal compositions, as well as coal-firing equipment and techniques and firing practices in the industry, the physical properties, chemical compositions and pozzolanic activity of the fly ashes will vary markedly. The extent and rate of pozzolanic reaction involving fly ashes is apparently a function of several factors, including the quantity of lime, cement, total silica and/or alumina in the fly ash. For example, DOT report No. FHWA—IP—76-16, states that fly ashes having large amounts of free lime as indicated by CaO content tend to be very reactive and probably exhibit some degree of self-hardening. U.S. Patent No. 4,210,457 contains details of typical chemical analyses of a number of types of fly ash. While the activity of the several fly ashes varied somewhat, no fly ash was found that was inoperable in the present compositions. It will be appreciated by the man skilled in the art that he should vary the content and the source of the fly ash to optimize the properties of the curable polymer concrete compositions commensurate with his end use objectives.

The aggregate composition will contain 5% to 50% by weight of fly ash. In preferred embodiments of the invention, aggregate compositions having fly ash contents in the range 10% to 25% by weight of the aggregate compositions have been found to give very good results.

At least part of the balance of the aggregate composition is sand. It is generally preferred for the sand to be sand derived from the crushing of silica materials such as rock. In other words, the sand has been obtained as a fractured product and exhibits an irregular and somewhat sharp feel. This sand is required in conventional hydraulic concretes and mortars to impart the necessary structural strength. The so-called "beach" sand which has been uniformly rounded by the wind and/or water action, in general, produces poor physical properties in hydraulic concretes and conventional PC compositions; however, such sands, while not as good as fractured sand, can be used, alone or in blends with fractured sands, in the present compositions to give good physical properties not exhibited by conventional PC compositions.

In mechanical analysis of soil, sand, according to international classification, has a size between 0.02 mm and 2.0 mm (see definition of sand in Chambers "Dictionary of Science and Technology", Edinburgh 1976). In preferred aggregate compositions, of the non-fly ash balance of the aggregate composition, at least 35% by weight is sand of particle size less than 1.19 mm.

In addition to sand and fly ash the aggregate composition may include other materials such as glass fibres or mats; metal fibres, staples, bars, mats or mesh; polymeric materials such as rubber and plastics, including expanded polymers; expanded mica; and crushed stone and gravel components having particle sizes greater than those of sand (i.e. greater than 200 mm) (e.g. up to about 3.8 cm).

Thus for some structural applications gravel components greater than those of sand may form up to 50%, preferably up to 25%, by weight of the aggregate composition.

For light-weight and insulating materials the aggregate composition may advantageously contain up to 25% by weight of an insulating material such as expanded mica.

For impact resistant cured polymer concrete compositions the aggregate composition preferably includes metal fibres, staples, mats or mesh, e.g. up to 10% by weight of steel fibres or staples.

The invention also provides a process for preparing an article which comprises mechanically mixing together components of a curable polymer concrete composition of the invention, moulding the resulting composition, alone or in association with a substrate, and curing the moulded composition at a temperature in the range 0°C to 200°C, preferably 20°C to 100°C.

Further in accordance with the invention there is provided an article comprising a cured moulded polymer concrete composition of the invention, alone or in association with a substrate. Such articles include pipes, metallic or non-metallic pipes coated internally and/or externally with a cured polymer concrete composition, laminated structures, building panels, armour plating, bridge deck and dam and spillway overlays.

The invention will be further understood from the following illustrative examples in which unless otherwise indicated parts and percentages are by weight, and mesh sizes are U.S. standard sieve (metric conversions in brackets).

Vinyl Ester Resin A is a vinyl ester resin-styrene blend containing 62.5 parts by weight of a vinyl ester prepared by reacting one mole of a glycidyl polyether of 2,2-bis(4-hydroxyphenyl)propane having an epoxy equivalent weight of about 375 and an average molecular weight of about 920 with two moles of methacrylic acid in the presence of an esterification catalyst, and 37.5 parts by weight of styrene.

Polyester A is an isophthalic/glycol polyester (Reichold, "Polylite" 31-439) ("Polylite" is a registered Trade Mark).

Example I

This example illustrates the fabrication of pipe using a vinyl ester resin-based polymer concrete composition.

10,306 grams of flint course silica sand, 2,576 grams of fly ash (17%w) were blended together. To 2,098 grams of Vinyl Ester Resin A were added 6.3 grams of cobalt naphthenate and the mixture thoroughly mixed and then 42.0 grams of methyl ethyl ketone peroxide added and thoroughly mixed. The catalyzed resin was then added to the aggregate blend and the resulting slurry mixed for 3 to 4 minutes. The slurry was then poured into a hopper which gravity feeds into an auger screw delivery system which displaced the polymer concrete material into a waxed cardboard mould one foot long, having an outside diameter of twelve inches (30 cm) and an inside diameter of ten inches (25 cm) (wall thickness of one inch 2.5 cm). The mould was mounted between two flat vertical plates, grooved for the cardboard mould, which were connected to each other by equal length rods and driven by a variable speed motor. After the polymer concrete composition was displaced into the cardboard drum, the drum was revolved at approximately 300 rpm for 60 minutes. The mould was then removed from the grooved flat plates and the pipe stripped from the mould. The pipe was then post-cured at about 93°C (200°F) for one hour, after which it was removed and allowed to cool. The pipe was tested according to ASTM C-497, "External Load Crushing Strength Test by the Three Edge Bearing Method". The crushing strength for the polymer concrete pipe averaged 5600 pounds per linear foot (8330 kg/m), which is almost three times the crushing strength of a concrete pipe having the same diameter and wall thickness.

Example II

This example illustrates the resistance to projectiles of vinyl ester resin-based polymer concrete compositions.

The procedure of Example I was repeated wherein a polymer concrete composition containing 85% aggregate, which contained 80% sand and 20% fly ash, and 15% Vinyl Ester Resin A (containing 2% by weight of MEKP based on the Vinyl Ester) was prepared. To this composition were added 6% by weight based on the composition of steel deformed end fibres (conventional concrete hooked end staples having an average size and gauge of 30 mm long and 0.4 mm diameter) and the reinforced mixture moulded into blocks 3"×6"×12" (7.5 cm×15 cm×30 cm) and cured at 20°C for 60 minutes and then postcured at 95°C for 30 minutes. The cured blocks were taken to a firing range. At 25 yards (23 metres), a 0.225 high velocity rifle bullet and a 0.308 NATO projectile were fired at the blocks. The blocks repelled both high velocity projectiles thus illustrating the superior impact resistance and anti-fragmentation properties of the instant polymer concrete compositions. The 0.223 and 0.308 bullets would either pass through conventional concrete or severely fragment the concrete. It will be appreciated that the 0.308 projectile will pass through two-1/2 inch (1.25 cm) thick steel plates.

The instant reinforced polymer concrete blocks were barely chipped on the surface by either projectile.

Example III

This example illustrates the use of non-fractured sand in vinyl ester resin-based polymer concrete compositions.

The procedures of Example I were essentially repeated wherein various polymer concrete compositions were prepared using "contaminated" rounded sand obtained from Saudi Arabia, as well as conventional "fractured" sand.

The respective compositions are as follows (all compositions contained 2% by weight of methyl ethyl ketone peroxide (MEKP) and 0.5% by weight of cobalt naphthenate based on the weight of Vinyl Ester Resin A):

| Composition | Parts by weight |
| --- | --- |
| Composition A (not in accordance with the invention) | |
| Vinyl ester A | 15 |
| Aggregate | 85 |
| (a) Saudi Dune Sand 50% | |
| 71%<100 mesh (0.149 mm) | |
| 22% #50 mesh (0.297 mm) | |
| 7% #30 mesh (0.59 mm) | |
| (b) Saudi Coarse River Gravel 50% | |
| 42% #12 mesh (1.68 mm) | |
| 43% #30 mesh (0.59 mm) | |
| 15% #50 mesh (0.297 mm) | |
| Composition B (not in accordance with the invention) | |
| Vinyl Ester A | 16 |
| Aggregate (Sand #17) | |
| 9% 40 mesh (0.42 mm) | |
| 41% 50 mesh (0.297 mm) | |
| 31% 70 mesh (0.210 mm) | |
| 14% 100 mesh (0.149 mm) | |
| 5% passing 100 mesh (0.149 mm) | |
| Composition C | |
| Vinyl Ester A | 10 |
| Aggregate | 90 |
| (a) 50/50 Saudi Blend of Composition A—80% | |
| (b) Fly ash 20% | |
| Composition D | |
| Vinyl Ester A | 14 |
| Aggregate | 86 |
| (a) Sand #17—80% | |
| (b) Fly ash—20% | |

5

The above compositions were cured at room temperature for 1 hour and then post-cured at 95°C for 30 minutes. The flexural and compressive strength of the cured compositions were then determined and the data are presented in Table I.

TABLE I

| Composition | Compressive strength, psi | Flexural strength, psi |
|---|---|---|
| A (comparative) | 10,860 ($7.49 \times 10^7$ Pa) | 3,460 ($2.39 \times 10^7$ Pa) |
| B (comparative) | 13,880 ($9.58 \times 10^7$ Pa) | 3,530 ($2.44 \times 10^7$ Pa) |
| C | 13,140 ($9.07 \times 10^7$ Pa) | 3,950 ($2.73 \times 10^7$ Pa) |
| D | 17,740 ($12.24 \times 10^7$ Pa) | 5,760 ($3.97 \times 10^7$ Pa) |

Example IV

This example illustrates the reduced shrinkage exhibited by vinyl ester resin-based polymer concrete compositions.

Sand/gravel mixture used in the compositions had the following composition:

35% passed 3/8" retained #4 (9.25 mm to 4.76 mm)
16% passed #4, retained #8 (4.76 mm to 2.38 mm)
12.4% passed #8, retained #16 (2.38 mm to 1.19 mm)
9.5% passed #16, retained #30 (1.19 mm to 0.59 mm)
6.9% passed #35, retained #50 (0.50 mm to 0.297 mm)
5.4% passed #50, retained #100 (0.297 mm to 0.149 mm)
3.8% passed #100 (0.149 mm).

Slab samples approximately 3"×9"×18" (7.5 cm×22.5 cm×45 cm) were prepared and cured at ambient temperature for 1 hour from the following composition:

| Composition | Parts by weight |
|---|---|
| Vinyl Ester A | 6 |
| Sand | 82.7 |
| Fly ash | 11.3 |
| Cumene hydroperoxide | 3%* |
| Cobalt naphthenate | 0.6%* |

* % by weight based on Vinyl Ester A.

The procedure was essentially repeated wherein an equivalent amount of neat methylmethacrylate was substituted for Vinyl Ester Resin A.

Shrinkage of the cured PC samples was then determined. The data were as follows:

| | Shrinkage, % |
|---|---|
| Vinyl Ester A | 0.15—0.17 |
| Methyl methacrylate | >0.5 |

It is generally considered that the shrinkage should be <0.25% to avoid cracking in PC coatings which are exposed to water, especially hot water. For example, PC compositions which are used in bridge decks,

6

pipe linings, dam spillway overlays, etc. should exhibit a shrinkage of <0.25% to prevent cracking and delamination.

Example V

Vinyl ester resin-based polymer concrete compositions were found to be suitable for the following applications: (1) pipelinings, especially hot water and chemical pipe linings, (2) tank linings, (3) bridge deck and dam spillway overlays, (4) armour coatings, (5) foundation pads and (6) wall panels. The instant compositions are very suitable for use as interior and/or exterior linings for metallic as well as non-metallic (cement concrete, plastic, resin, glass, etc.) pipe.

The pipe may be fabricated by well-known techniques wherein a substrate (carrier) such as a metal pipe is coated with the present composition and cured. Of course, the substrate layer may be coated with a composition such as a resin, an epoxy resin, or it may be treated with one or more compositions to enhance the adhesion of the instant vinyl ester polymer concrete compositions to the substrate. Also, one or more layers, i.e., a laminated structure, may be employed. For example, a metallic pipe may be coated with a glass, plastic and/or resinous coating before the application of the instant vinyl ester polymer concrete compositions. Accordingly, "substrate" as used herein is deemed to mean any layer, however thin, including coating layers, other than a layer of the instant polymer concrete composition. The additional use of a reinforcement material, which may be metallic or non-metallic, in the polymer concrete is useful, for example, glass or plastic (nylon) fibres, webs or mats may be incorporated therein.

Example VI

Related improved results are achieved when the vinyl ester is a 50:50 blend of vinyl ester and styrene, said vinyl ester being prepared by first reacting 2 moles of methacrylic acid and one mole of a diglycidyl polyether of 2,2-bis(4-hydroxyphenyl)propane having a WPE of about 180, an average molecular weight of about 360 and then esterifying about 10% of the secondary hydroxyl groups with maleic anhydride.

Example VII

This example illustrates the preparation of polyester-based polymer concrete compositions with both non-fractured sand and fractured sand.

The following compositions were prepared by mixing the various components together and test specimens prepared by curing at room temperature for 1 hour and post-curing at 95°C for 30 minutes (all compositions contained 2% by weight of methyl ethyl ketone peroxide (MEKP) and 0.4% by weight of cobalt naphthenate, based on the weight of Polyester A).

**0 062 373**

| Composition | Parts by weight |
|---|---|
| Composition AA (not in accordance with the invention) | |
| Polyester A | 17 |
| Aggregate | 83 |
| (a) Saudi Dune Sand 50% | |
| 71%<100 mesh (0.149 mm) | |
| 22% #50 mesh (0.297 mm) | |
| 7% #30 mesh (0.59 mm) | |
| (b) Saudi Coarse River Gravel 50% | |
| 42% #12 mesh (1.68 mm) | |
| 43% #30 mesh (0.59 mm) | |
| 15% # 50 mesh (0.297 mm) | |
| Composition AB (not in accordance with the invention) | |
| Polyester A | 17 |
| Aggregate (Sand #17) | 83 |
| 9% 40 mesh (0.42 mm) | |
| 41% 50 mesh (0.297 mm) | |
| 31% 70 mesh (0.210 mm) | |
| 14% 100 mesh (0.149 mm) | |
| 5% passing 100 mesh (0.149 mm) | |
| Composition AC | |
| Polyester A | 14 |
| Aggregate | 86 |
| (a) 50/50 Saudi Blend of Composition AA 80% | |
| (b) Fly ash 20% | |
| Composition AD | |
| Polyester A | 14 |
| Aggregate | 86 |
| (a) Sand #17 80% | |
| (b) Fly ash 20% | |

The above compositions were cured at room temperature for 1 hour and then post-cured at 95°C for 30 minutes. The flexural and compressive strength of the cured compositions were then determined and the data are presented in Table II.

**0 062 373**

TABLE II

| Composition | Compressive strength, psi | Flexural strength, psi |
| --- | --- | --- |
| AA (comparative) | 9,300 ($6.40 \times 10^7$ Pa) | 2,610 ($1.80 \times 10^7$ Pa) |
| AB (comparative) | 9,860 ($6.80 \times 10^7$ Pa) | 2,720 ($1.88 \times 10^7$ Pa) |
| AC | 11,390 ($7.86 \times 10^7$ Pa) | 3,050 ($2.10 \times 10^7$ Pa) |
| AD | 12,840 ($8.86 \times 10^7$ Pa) | 3,800 ($2.62 \times 10^7$ Pa) |

The data clearly indicate that fly ash increased the compressive and flexural strengths of the polyester-based polymer concrete both when "contaminated rounded" sand was employed and when a good fractured sand was employed.

Example VIII
When Composition AD is applied as a pipe lining via centrifugal casting methods and cured, the resulting lining exhibits good chemical resistance.

Example IX
The procedures of Example VII were essentially repeated wherein Polyester A is replaced with an equivalent amount of the following polyesters:
1) Bisphenol A-based polyester containing 50% by weight of styrene (Diamond Shamrock, Dion® 6694NP)
2) Dion® 6315 (Diamond Shamrock)
3) Dion® 6308 (Diamond Shamrock)
4) Orthophthalic/glycol polyester (Reichold, Polylite 31-006).
Related results are obtained in each instance.

Example X
The impact resistance is improved by the addition of metallic reinforcement such as metal staples to the composition of Example VII. Likewise, the replacement of about 20% of the sand with fractured gravel improved the impact resistance.

**Claims**

1. A polymer concrete composition comprising a curable unsaturated ester resin, and an aggregate comprising fly ash and sand, characterized in that the composition comprises
(1) from 3% to 15% by weight of a composition comprising an unsaturated polyester or vinyl ester resin and a free-radical initiator, said composition having a curing time of at least 1 hour at ambient temperature, said unsaturated polyester resin being selected from resins derived from glycol and iso- or orthophthalic acid, said vinyl ester resin being selected from resins prepared by reacting an ethylenically unsaturated monocarboxylic acid with a glycidylpolyether of a polyhydric phenol having an epoxy equivalency greater than 1.0.
(2) from 85% to 97% by weight of an aggregate composition containing 5% to 50% by weight of fly ash based on the aggregate composition, at least part of the balance being sand.
2. The composition claim, wherein the polyester or vinyl ester resin composition contains styrene, the weight ratio of polyester or vinyl ester resin to styrene being in the range 80:20 to 50:50.
3. The composition of claim 1 or 2, wherein of the non-fly ash balance of the aggregate composition, at least 35% by weight is sand of particle size less than 1.19 mm.

**Patentansprüche**

1. Kunststoff-Zementmasse aus einem härtbaren ungesättigten Esterharz und einem Zuschlagstoff in Form von Flugasche und Sand, dadurch gekennzeichnet, daß sie
(1) 3 bis 15 Gew.% der Masse an ungesättigtem Polyester oder Vinylesterharz und einem freie Radikale bildenden Initiator enthält und die Masse bei Umgebungstemperatur eine Härtezeit von zumindest 1 Stunde besitzt und das ungesättigte Polyesterharz ein solches ist, das abgeleitet ist von Glykol und Iso-

9

oder Orthophthalsäure, und das Vinylesterharz ein solches ist, das hergestellt worden ist durch Umsetzung einer ethylenisch ungesättigten Monocarbonsäure mit einem Glycidpolyether eines mehrwertigen Phenols mit einem Epoxyäquivalent von >1, und

(2) 85 bis 97 Gew.% eines Zuschlagstoffs aus 5 bis 50 Gew.% Flugasche, Rest zumindest teilweise Sand enthält.

2. Masse nach Anspruch 1, worin der Polyester oder das Vinylesterharz Styrol enthält und das Gewichtverhältnis von Polyester oder Vinylesterharz zu Styrol 80:20 bis 50:50 beträgt.

3. Masse nach Anspruch 1 oder 2, worin der Zuschlagstoff neben der Flugasche zumindest 35 Gew.% Sand mit einer Feinheit <1,19 mm ist.

**Revendications**

1. Composition de béton de résine comprenant une résine d'ester insaturé durcissable et un agrégat comprenant des cendres volantes et du sable, caractérisée en ce que la composition comprend

(1) de 3% à 15% en poids d'une composition comprenant une résine de polyester ou d'ester vinylique insaturé et un initiateur de radicaux libres, la dite composition ayant un temps de durcissement d'au moins 1 heure à la température ambiante, la dite résine de polyester insaturé étant choisie parmi des résines dérivées du glycol et de l'acide iso- ou orthophtalique, la dite résine d'ester vinylique étant choisie parmi des résines préparées en faisant réagir un monoacide carboxylique à insaturation éthylénique avec un polyéther glycidique d'un phénol polyhydrique ayant une équivalence en époxy supérieure à 1,0;

(2) de 85% à 97% en poids d'une composition d'agrégat contenant 5% à 50% en poids de cendres volantes par rapport à la composition d'agrégat, une partie au moins du reste étant du sable.

2. Composition selon la revendication 1, dans laquelle la composition de résine de polyester ou d'ester vinylique contient du styrène, le rapport pondéral entre la résine de polyester ou d'ester vinylique et le styrène étant dans l'intervalle de 80:20 à 50:50.

3. Composition selon la revendication 1 ou 2, dans laquelle, dans le reste de la composition d'agrégat qui n'est pas constitué par des cendres volantes, au moins 35% en poids est du sable de granulométrie inférieure à 1,19 mm.